# EUROPÄISCHE PATENTSCHRIFT

(11) **EP 1 574 730 B1**
(45) Veröffentlichungstag und Bekanntmachung des Hinweises auf die Patenterteilung: **05.05.2010**
(21) Anmeldenummer: 05004519.4
(22) Anmeldetag: 02.03.2005
(51) Int. Cl.: F16C 33/58, F16C 33/60

(54) **Wälzlager**
Roller bearing
Palier à roulement

(30) Priorität: 08.03.2004 DE 102004011550
(43) Veröffentlichungstag der Anmeldung: 14.09.2005
(73) Patentinhaber: AB SKF, 415 50 Göteborg (SE)
(72) Erfinder: Bergmayr, Johann, 4421 Aschach an der Steyr (AT); Gurka, Jiri, 4441 Behamberg (AT); Schweitzer, Ferdinand, 3352 St. Peter/Au (AT)
(74) Vertreter: Kohl, Thomas

(56) Entgegenhaltungen:
- DE-U1- 20 300 466

## Beschreibung

Die Erfindung betrifft ein Wälzlager, das mindestens einen Innenring, mindestens einen Außenring und zwischen Innenring und Außenring angeordnete Wälzkörper umfasst, wobei das Wälzlager vorzugsweise als Drei- oder Vierpunktlager oder als Rillenkugellager ausgebildet ist.

Wälzlager der gattungsgemäßen Art kommen in vielfältiger Weise zum Einsatz. Zumeist ist der Innenring des Lagers zweiteilig ausgebildet, d.h. es kommen zwei nebeneinander angeordnete Innenringe zum Einsatz, die zusammen zwei linienförmige Anlaufflächen für die Kugeln bilden, die zwischen Innen- und Außenring angeordnet sind. Diese Lager werden oft als Axiallager verwendet, so dass sie mit einem Radiallager, beispielsweise mit einem Zylinderrollenlager, gepaart werden.

Ein beim Einsatz dieser Lager problematischer Punkt besteht darin, dass es infolge der Zweiteilung des Innenrings sehr schwierig ist, das Lager bzw. dessen Ringe nach Erreichen der Gebrauchsdauer zu wechseln. Über den Umfang verteilt angeordnete Abziehnuten für ein entsprechendes Abziehwerkzeug sind beispielsweise aus der DE 203 00 466 U1 bekannt. Allerdings hat es sich herausgestellt, dass das Ansetzen des Abziehwerkzeugs bei dieser Ausgestaltung mitunter schwierig ist.

Ein anderes Problem besteht darin, dass insbesondere bei der Paarung des eingangs genannten Wälzlagers mit einem Radiallager in Form eines Zylinderrollenlagers an der axialen Stoßfläche zwischen Drei- bzw. Vierpunktlager und Zylinderrollenlager sich häufig eine Barriere für das Schmiermittel ergibt, so dass die Schmierung der Lagereinheit nicht optimal ist.

Im Lichte der genannten Nachteile liegt der Erfindung die **Aufgabe** zugrunde, ein Wälzlager der eingangs genannten Art so weiterzubilden, dass es in besonders einfacher Weise möglich sein soll, seine Lagerringe bei Bedarf von einer Welle abzuziehen. Ferner soll erreicht werden, dass das Wälzlager so ausgebildet ist, dass eine besonders günstige Versorgung der Lagereinheit mit Schmiermittel, insbesondere mit Schmieröl, möglich ist.

Die **Lösung** dieser Aufgabe durch die Erfindung ist **dadurch gekennzeichnet, dass** an mindestens einem der Lagerringe im Bereich seiner seitlichen Stirnfläche eine ringförmig umlaufende Nut eingebracht ist, die zum Eingriff der Arbeitsfläche eines Abziehwerkzeugs geeignet ist, wobei die Nut eine unter einem ersten Winkel zur Radialrichtung verlaufende erste Kegelfläche aufweist, wobei der erste Winkel zwischen 10° und 45° beträgt, und dass sich an das eine Ende der ersten Kegelfläche in Richtung auf eine Laufbahn des Lagerrings gesehen eine zweite Kegelfläche anschließt, wobei diese unter einem vom ersten Winkel unterschiedlichen zweiten Winkel bezogen auf die Achsrichtung angeordnet ist, der bezogen auf die Achsrichtung zwischen 15° und 40° beträgt.

Mit der vorgeschlagenen Ausgestaltung wird nicht nur erreicht, dass es in besonders einfacher Weise möglich wird, ein Abziehwerkzeug zum axialen Abziehen der Lagerringe zum Ansatz zu bringen. Weiterhin hat sich herausgestellt, dass durch die spezifische geometrische Ausbildung der Nut ein besonders günstiger Fluss von Schmieröl möglich ist, so dass nicht nur das Drei- bzw. Vierpunktlager selber, sondern insbesondere auch ein sich an dieses anschließendes Zylinderrollenlager optimal mit Schmiermittel versorgt werden kann.

Besonders vorteilhaft kommt das vorgeschlagene Wälzlager dann zum Einsatz, wenn der Innenring zweigeteilt und der Außenring einteilig ausgebildet ist.

Mit Vorteil ist vorgesehen, dass die radiale Erstreckung der Nut zwischen 8 % und 15 % des Außendurchmessers des Lagerrings beträgt; die axiale Breite der Nut beträgt bevorzugt zwischen 10 % und 25 % der Breite des Innenrings bzw. des Außenrings.

Die Strömungsverhältnisse für Schmiermittel einerseits, aber auch das Einfädeln eines Abziehwerkzeugs können durch die erfindungsgemäße Ausgestaltung verbessert werden. Die erste Kegelfläche und die zweite Kegelfläche können über einen runden Übergangsabschnitt miteinander verbunden sein. Dabei beträgt der Radius des Übergangsabschnitts gemäß einer bevorzugten Ausführungsform zwischen 0,05 mm und 4 mm.

Als besonders vorteilhaft hat es sich herausgestellt, wenn vorgesehen wird, dass die zweite Kegelfläche scharfkantig zum Außendurchmesser oder Innendurchmesser des Lagerrings übergeht. Hierdurch kann erreicht werden, dass es zu einem Abriss der Strömung des Schmiermittels an dieser Stelle kommt, was einen besonders günstigen Einfluss auf die Schmiermittelversorgung des zu schmierenden Lagerbereichs hat.

An das andere Ende der ersten Kegelfläche kann sich zunächst ein konkav gerundeter Übergangsabschnitt und daran wiederum ein konvex gerundeter Übergangsabschnitt anschließen. Die Radien der Übergangsabschnitte liegen bevorzugt zwischen 0,5 mm und 2 mm.

An den konvex gerundeten Übergangsabschnitt kann sich weiterhin eine dritte Kegelfläche anschließen. Mit Vorteil geht diese dritte Kegelfläche scharfkantig in die seitliche Stirnfläche über.

Als weitere Fortbildung des Wälzlagers kann vorgesehen werden, dass der Bereich des Lagerrings, der zwischen der Nut und der Laufbahn der Wälzkörper liegt, kegelförmig ausgebildet ist. Als Kegelwinkel dieses Bereichs ist mit Vorteil ein Wert zwischen 0,05° und 15° vorgesehen. Mit dieser Ausgestaltung wird es möglich, die Versorgung der Lagereinheit mit Schmiermittel weiter zu verbessern.

Das vorgeschlagene Lager ist bevorzugt als Drei- oder Vierpunktlager oder als Rillenkugellager ausgebildet. Es kann jedoch jedes beliebige Wälzlager erfindungsgemäß ausgebildet werden.

Mit dem Erfindungsvorschlag wird es möglich, ein sehr einfach aufgebautes Abziehwerkzeug zum axialen Abziehen der Lagerringe von einer Welle zu schaffen, wobei der Abziehvorgang selber ohne Probleme und in einfacher Weise durchgeführt werden kann. Ferner ergibt sich durch die spezifische Ausgestaltung der ringförmig umlaufenden Nut im axialen Endabschnitt des Lagerrings eine optimale Schmiermittelversorgung des Lagers, was dessen Gebrauchsdauer erhöht.

In der Zeichnung ist ein Ausführungsbeispiel der Erfindung dargestellt. Es zeigen:
Figur 1 den Radialschnitt einer Lagereinheit, bestehend aus einem Vierpunktlager und einem sich hieran anschließenden Zylinderrollenlager und
Figur 2 eine Vergrößerung des Radialschnitts des linken Innenrings des Vierpunktlagers gemäß Figur 1.

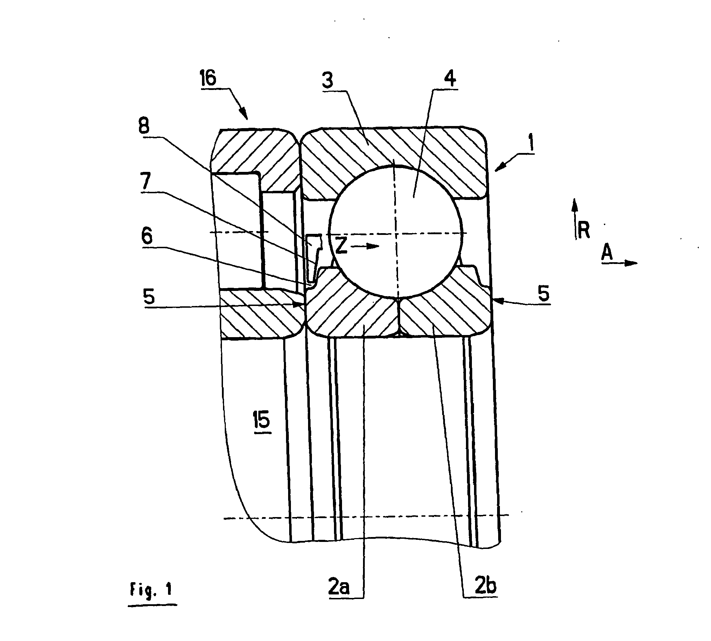

In Figur 1 ist eine Lageranordnung zu sehen, mit der eine nicht näher dargestellte Welle 15 sowohl radial als auch axial gelagert wird. Zur axialen Festlegung der Welle 15 ist ein Wälzlager 1 in Form eines Vierpunktlagers vorgesehen. An das Wälzlager 1 schließt sich in axialer Richtung ein Zylinderrollenlager 16 an, das für die radiale Lagerung der Welle 15 sorgt. Das Vierpunktlager 1 hat zwei nebeneinander angeordnete Innenringe 2a und 2b sowie einen einteiligen Außenring 3. Zwischen Innenringen 2a, 2b und Außenring 3 sind Wälzkörper 4 in Form von Kugeln angeordnet. Die seitliche Stirnfläche 5 des Wälzlagers 1 stellt eine Anlagefläche für die entsprechende Stirnfläche des Zylinderrollenlagers 16 dar.

Um ein einfaches Abziehen des Innenrings 2a von der Welle 15 in Achsrichtung A bei Bedarf vornehmen zu können, ist der Innenring 2a - und entsprechend gespiegelt auch der Innenring 2b - mit einer Nut 6 im Bereich der seitlichen Stirnfläche 5 versehen. Diese Nut 6 ist als Ringnut ausgebildet, d. h. sie läuft über den gesamten Umfang gleichförmig um.
Wie in beiden Figuren dargestellt ist, ist die Nut 6 so ausgebildet, dass die Arbeitsfläche 7 eines Abziehwerkzeugs 8, das nicht näher dargestellt und als solches hinlänglich vorbekannt ist, in sie eingreifen kann. Hierzu wird die Arbeitsfläche 7 des Abziehwerkzeugs 8 in Achsrichtung A in axialer Höhe der Nut 6 durch den sich zwischen Innenring 2a, 2b und Außenring 3 befindlichen Ringspalt geschoben und dann radial nach innen gedrückt, so das die Arbeitsfläche 7 in die Nut 6 eingreift. Hierzu weist die Nut 6 eine erste Kegelfläche 9 auf, die unter einem ersten Winkel α₁ zur Radialrichtung R verläuft. Dieser Winkel α₁ entspricht dem Winkel, unter dem die Kontaktfläche der Arbeitsfläche 7 des Abziehwerkzeugs 8 verläuft. Dieser Winkel α₁ liegt zwischen 10° und 45°, besonders bevorzugt zwischen 10° und 20°.

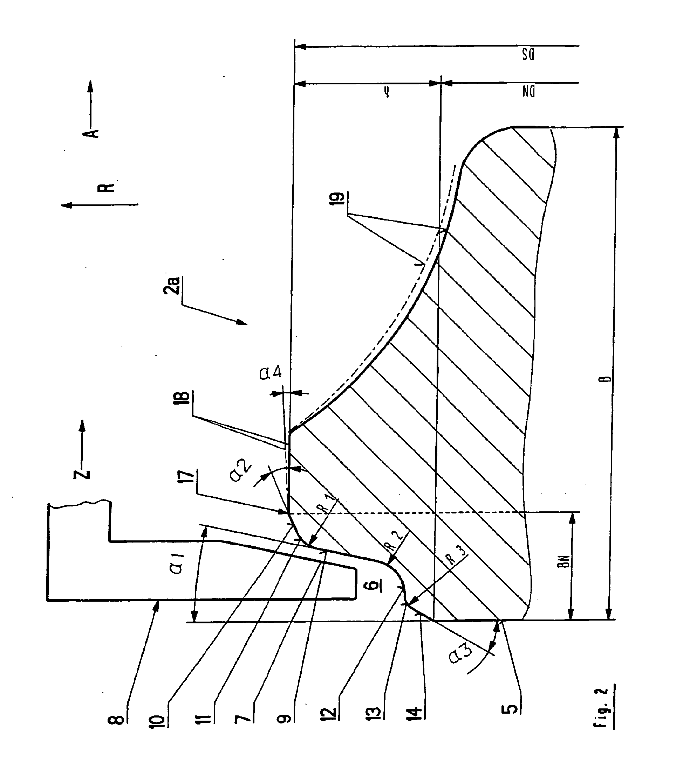

Wie insbesondere in Figur 2 gesehen werden kann, schließt sich an das obere Ende der ersten Kegelfläche 9 eine zweite Kegelfläche 10 an, d. h. eine Fläche, die einen Kegelabschnitt im axialen Endbereich des Innenrings 2a bildet. Der zweite Winkel α₂, unter dem die Kegelfläche 10 zur Achsrichtung A ausgerichtet ist, beträgt bevorzugt zwischen 15° und 40°.

Die beiden ebenen Flächen, d. h. die beiden Kegelflächen 9 und 10 sind durch einen runden Übergangsabschnitt 11 miteinander verbunden, dessen Radius mit R₁ gekennzeichnet ist, der zwischen 0,5 und 4 mm liegt. Hingegen ist am Auslauf der zweiten Kegelfläche 10 zum Außendurchmesser D_{S} des Innenrings 2a vorgesehen, dass sich hier eine scharfe Kante 17 ausbildet. Das hat zur Folge, dass es hier zu einem Abriss des Stroms von Schmieröl kommt, was positive Auswirkungen auf die Schmiermittelversorgung der Lagereinheit hat.

An die erste Kegelfläche 9 schließt sich nach unten zunächst ein konkav gerundeter Übergangsabschnitt 12 und daran wiederum ein konvex gerundeter Übergangsabschnitt 13 an, der in eine dritte Kegelfläche 14 übergeht. Die Radien R₂ und R₃ der Übergangsabschnitte 12 bzw. 13 liegen zwischen 0,5 mm und 2 mm. Der dritte Winkel α₃, mit dem die dritte Kegelfläche 14 zur Radialrichtung R ausgerichtet ist, beträgt zwischen 15° und 45°.

Hinsichtlich der Größe der Nut 6 ist vorgesehen, dass die radiale Erstreckung h, also die Höhe der Nut 6 in Radialrichtung R betrachtet, zwischen 8 % und 15 % des Außendurchmessers D_{S} des Lagerrings 2a beträgt. Die axiale Erstreckung der Nut 6, also deren Breite B_{N}, beträgt zwischen 10 und 25 % der Breite B des Lagerrings 2a. Der Durchmesser D_{N} des Nutgrundes ergibt sich - wie in Figur 2 ersichtlich - als Außendurchmesser D_{S} abzüglich doppelter Höhe h.

In Figur 2 ist mit strichpunktierter Linie eine alternative Ausbildung des Lagerrings 2a skizziert. Hiernach ist vorgesehen, dass von der scharfen Kante 17 aus der radial außenliegende Umfang des Innenrings 2a bis zur Laufbahn 19 für die Wälzkörper 4 als Kegelfläche ausgebildet ist. Der Kegelwinkel ist mit α₄ bezeichnet (vierter Winkel). Für diesen Winkel haben sich Werte zwischen 0,5° und 15° bewährt.

Die spezifische geometrische Ausgestaltung der Nut 6 lässt nicht nur zu, dass ein Abziehwerkzeug 8 mit entsprechenden Arbeitsflächen 7 in sehr einfacher Weise eingeklinkt werden kann, um den Lagerring 2a von der Welle 15 abzuziehen. Darüber hinaus ergibt sich insbesondere im Zusammenwirken mit dem Zylinderrollenlager 16 eine optimale Versorgung mit Schmieröl für beide Lager, so dass die Gebrauchsdauer der Lagereinheit hoch ist.

Das einfache Abziehen des Lagerrings 2a macht sich nicht nur dann vorteilhaft bemerkbar, wenn eine Lageranordnung vorgesehen wird, wie sie in Figur 1 skizziert ist. Dasselbe gilt, wenn ein Vierpunktlager 1 direkt an einem Wellenabsatz angeordnet ist, von dem der Innenring 2a schwierig abzuziehen ist.

### Ein weiterer Vorteil der erfindungsgemäßen Ausbildung besteht in folgendem:

Wenn ein asymmetrischer Lagerring auf seiner vollen seitlichen Stirnfläche in axialer Richtung belastet wird, können Biegeverformungen entstehen, die zu einem Aufweiten der Innenringpassung zur Welle führen können, was zu Problemen mit Passungsrost führen kann. Aufgrund der vorgesehenen Nut können diesbezüglich Verbesserungen erreicht werden. Bei entsprechender Ausbildung einerseits der Laufbahn für die Wälzkörper und andererseits der Geometrie der Nut kann insgesamt eine geringere Verformung der Laufbahn für die Wälzkörper bei der Beaufschlagung mit axialen Kräften erreicht werden. Die Reduzierung der seitlichen Anlagefläche des Lagerrings durch die Nut hat zur Folge, dass die Geometrie des Lagerrings bei der Beaufschlagung mit einer axialen Kraft nur in relativ geringem Maße verändert wird. Insbesondere kann dadurch erreicht werden, dass die Geometrie der Laufbahn, auf deren möglichst präzise Einhaltung es ankommt, nur minimal bei Axialkraftbeaufschlagung verändert wird. Dadurch kann beispielsweise bei einem Vierpunktlager die Gefahr verringert werden, dass es zu einem unerwünschten Dreipunktkontakt der Kugeln im Lager kommt.

Werden zwei Lagerringe 2a, 2b in der in Figur 1 skizzierten Weise miteinander gepaart, die zusammen die Innenringlaufbahn für die Kugeln 4 bilden, kann bei entsprechender Dimensionierung der Nut wie vorstehend beschrieben erreicht werden, dass bei Aufbringung einer Axialkraft auf die Lagerringe sich praktisch vernachlässigbare geometrische Änderungen der Laufbahn 19 ergeben, so dass auch dann eine optimale Führung der Kugeln 4 in ihrer Laufbahn 19 gewährleistet ist.

### Bezugszeichenliste

- 1: Wälzlager
- 2a, 2b: Innenring
- 3: Außenring
- 4: Wälzkörper
- 5: seitliche Stirnfläche
- 6: Nut
- 7: Arbeitsfläche eines Abziehwerkzeugs
- 8: Abziehwerkzeug
- 9: erste Kegelfläche
- 10: zweite Kegelfläche
- 11: runder Übergangsabschnitt
- 12: konkav gerundeter Übergangsabschnitt
- 13: konvex gerundeter Übergangsabschnitt
- 14: dritte Kegelfläche
- 15: Welle
- 16: Zylinderrollenlager
- 17: scharfe Kante
- 18: Bereich des Lagerrings
- 19: Laufbahn
- R: Radialrichtung
- A: Achsrichtung
- h: radiale Erstreckung
- D_{S}: Außendurchmesser
- D_{N}: Nutgrunddurchmesser
- B: Breite des Lagerrings 2a, 2b, 3
- B_{N}: Breite der Nut
- Z: Abzugskraft
- α₁: erster Winkel
- α₂: zweiter Winkel
- α₃: dritter Winkel
- α₄: vierter Winkel
- R₁: Radius
- R₂: Radius
- R₃: Radius

## Patentansprüche

1. Wälzlager (1), das umfasst:
mindestens einen Innenring (2a, 2b),
mindestens einen Außenring (3) und
zwischen Innenring (2a, 2b) und Außenring (3) angeordnete Wälzkörper (4),
**dadurch gekennzeichnet, dass**
an mindestens einem der Lagerringe (2a, 2b, 3) im Bereich einer seitlichen Stirnfläche (5) eine ringförmig umlaufende Nut (6) eingebracht ist, die zum Eingriff der Arbeitsfläche (7) eines Abziehwerkzeugs (8) geeignet ist, wobei die Nut (6) eine unter einem ersten Winkel (α₁) zur Radialrichtung (R) verlaufende erste Kegelfläche (9) aufweist, wobei der erste Winkel (α₁) zwischen 10° und 45° beträgt, und dass sich an das eine Ende der ersten Kegelfläche (9), in Richtung auf eine Laufbahn (19) des Lagerrings (2a, 2b, 3) gesehen, eine zweite Kegelfläche (10) anschließt, wobei diese unter einem vom ersten Winkel (α₁) unterschiedlichen zweiten Winkel (α₂), bezogen auf die Achsrichtung (A), angeordnet ist, der bezogen auf die Achsrichtung (A) zwischen 15° und 40° beträgt.

2. Wälzlager nach Anspruch 1, **dadurch gekennzeichnet, dass** der Innenring (2, 2a, 2b) zweigeteilt und der Außenring (3) einteilig ausgebildet ist.

3. Wälzlager nach Anspruch 1 oder 2, **dadurch gekennzeichnet, dass** die radiale Erstreckung (h) der Nut (6) zwischen 8 % und 15 % des Außendurchmessers (D_{S}) des Lagerrings (2a, 2b) beträgt.

4. Wälzlager nach einem der Ansprüche 1 bis 3, **dadurch gekennzeichnet, dass** die axiale Breite (B_{N}) der Nut (6) zwischen 10 % und 25 % der Breite (B) des Innenrings (2a, 2b) bzw. des Außenrings (3) beträgt.

5. Wälzlager nach einem der Ansprüche 1 bis 4, **dadurch gekennzeichnet, dass** die erste Kegelfläche (9) und die zweite Kegelfläche (10) über einen runden Übergangsabschnitt (11) miteinander verbunden sind.

6. Wälzlager nach Anspruch 5, **dadurch gekennzeichnet, dass** der Radius (R₁) des Übergangsabschnitts (11) zwischen 0,05 mm und 4 mm liegt.

7. Wälzlager nach einem der Ansprüche 1 bis 6, **dadurch gekennzeichnet, dass** die zweite Kegelfläche (10) scharfkantig zum Außendurchmesser (D_{S}) oder Innendurchmesser des Lagerrings (2a, 2b, 3) übergeht.

8. Wälzlager nach einem der Ansprüche 1 bis 7, **dadurch gekennzeichnet, dass** sich an das andere Ende der ersten Kegelfläche (9) zunächst ein konkav gerundeter Übergangsabschnitt (12) und daran wiederum ein konvex gerundeter Übergangsabschnitt (13) anschließt.

9. Wälzlager nach Anspruch 8, **dadurch gekennzeichnet, dass** die Radien (R₂, R₃) der Übergangsabschnitte (12, 13) zwischen 0,5 mm und 2 mm liegen.

10. Wälzlager nach Anspruch 8 oder 9, **dadurch gekennzeichnet, dass** sich an den konvex gerundeten Übergangsabschnitt (13) die dritte Kegelfläche (14) anschließt.

11. Wälzlager nach Anspruch 10, **dadurch gekennzeichnet, dass** dritte Kegelfläche (14) scharfkantig in die seitliche Stirnfläche (5) übergeht.

12. Wälzlager nach einem der Ansprüche 1 bis 11, **dadurch gekennzeichnet, dass** der Bereich (18) des Lagerrings (2a, 2b, 3), der zwischen der Nut (6) und der Laufbahn (19) der Wälzkörper (4) liegt, kegelförmig ausgebildet ist.

13. Wälzlager nach Anspruch 12, **dadurch gekennzeichnet, dass** der Winkel (α₄) des kegelförmig ausgebildeten Bereichs (18) zwischen 0,05° und 15° liegt.

14. Wälzlager nach einem der Ansprüche 1 bis 13, **dadurch gekennzeichnet, dass** es als Drei- oder Vierpunktlager oder als Rillenkugellager ausgebildet ist.

## Claims

1. Rolling bearing (1) comprising:
at least one inner ring (2a, 2b),
at least one outer ring (3) and
rolling bodies (4) arranged between the inner ring (2a, 2b) and outer ring (3),
**characterized in that**
an annularly encircling groove (6) is formed on at least one of the bearing rings (2a, 2b, 3) in the region of a lateral end surface (5), which groove (6) is suitable for the engagement of the working surface (7) of a pull-off tool (8), with the groove (6) having a first conical surface (9) which runs at a first angle (α₁) with respect to the radial direction (R) and with the first angle (α₁) being between 10° and 45°, and **in that** one end of the first conical surface (9) is adjoined, as viewed in the direction of a raceway (19) of the bearing ring (2a, 2b, 3), by a second conical surface (10), with the latter being arranged at a second angle (α₂) with respect to the axial direction (A), which second angle (α₂) differs from the first angle (α₁) and is between 15° and 40° with respect to the axial direction (A).

2. Rolling bearing according to Claim 1, **characterized in that** the inner ring (2, 2a, 2b) is of two-part design and the outer ring (3) is of single-part design.

3. Rolling bearing according to Claim 1 or 2, **characterized in that** the radial extent (h) of the groove (6) is between 8% and 15% of the outer diameter (D_{S}) of the bearing ring (2a, 2b).

4. Rolling bearing according to one of Claims 1 to 3, **characterized in that** the axial width (B_{N}) of the groove (6) is between 10% and 25% of the width (B) of the inner ring (2a, 2b) or of the outer ring (3).

5. Rolling bearing according to one of Claims 1 to 4, **characterized in that** the first conical surface (9) and the second conical surface (10) are connected to one another via a round transition section (11).

6. Rolling bearing according to Claim 5, **characterized in that** the radius (R₁) of the transition section (11) lies between 0.05 mm and 4 mm.

7. Rolling bearing according to one of Claims 1 to 6, **characterized in that** the second conical surface (10) merges with a sharp edge into the outer diameter (D_{S}) or inner diameter of the bearing ring (2a, 2b, 3).

8. Rolling bearing according to one of Claims 1 to 7, **characterized in that** the other end of the first conical surface (9) is adjoined firstly by a concavely rounded transition section (12), and the latter is adjoined in turn by a convexly rounded transition section (13).

9. Rolling bearing according to Claim 8, **characterized in that** the radii (R₂, R₃) of the transition sections (12, 13) lie between 0.5 mm and 2 mm.

10. Rolling bearing according to Claim 8 or 9, **characterized in that** the convexly rounded transition section (13) is adjoined by the third conical surface (14).

11. Rolling bearing according to Claim 10, **characterized in that** the third conical surface (14) merges with a sharp edge into the lateral end surface (5).

12. Rolling bearing according to one of Claims 1 to 11, **characterized in that** that region (18) of the bearing ring (2a, 2b, 3) which is situated between the groove (6) and the raceway (19) of the rolling bodies (4) is conical.

13. Rolling bearing according to Claim 12, **characterized in that** the angle (α₄) of the conical region (18) lies between 0.05° and 15°.

14. Rolling bearing according to one of Claims 1 to 13, **characterized in that** said rolling bearing is designed as a three-point or four-point bearing or as a deep-groove ball bearing.

## Revendications

1. Palier à roulement (1), comprenant :
au moins une bague interne (2a, 2b),
au moins une bague externe (3) et
des corps de roulement (4) disposés entre la bague interne (2a, 2b) et la bague externe (3),
**caractérisé en ce que**
sur au moins l'une des bagues de palier (2a, 2b, 3) dans la région d'une face frontale latérale (5), est pratiquée une rainure périphérique de forme annulaire (6) qui est adaptée pour l'engagement de la surface de travail (7) d'un outil de vissage (8), la rainure (6) présentant une première surface conique (9) s'étendant suivant un premier angle (α₁) par rapport à la direction radiale (R), le premier angle (α₁) étant compris entre 10° et 45° et **en ce qu'**une deuxième surface conique (10) se raccorde à l'une des extrémités de la première surface conique (9), vu dans la direction d'une piste de roulement (19) de la bague de palier (2a, 2b, 3), cette deuxième surface conique (10) étant disposée par rapport à la direction axiale (A), suivant un deuxième angle (α₂) différent du premier angle (α₁), qui est compris entre 15° et 40° par rapport à la direction axiale (A).

2. Palier à roulement selon la revendication 1, **caractérisé en ce que** la bague interne (2, 2a, 2b) est en deux parties et la bague externe (3) est réalisée d'une seule pièce.

3. Palier à roulement selon la revendication 1 ou 2, **caractérisé en ce que** l'étendue radiale (h) de la rainure (6) est comprise entre 8% et 15% du diamètre extérieur (D_{S}) de la bague de palier (2a, 2b).

4. Palier à roulement selon l'une quelconque des revendications 1 à 3, **caractérisé en ce que** la largeur axiale (B_{N}) de la rainure (6) est comprise entre 10% et 25% de la largeur (B) de la bague interne (2a, 2b) ou de la bague externe (3).

5. Palier à roulement selon l'une quelconque des revendications 1 à 4, **caractérisé en ce que** la première surface conique (9) et la deuxième surface conique (10) sont connectées l'une à l'autre par le biais d'une portion de transition ronde (11).

6. Palier à roulement selon la revendication 5, **caractérisé en ce que** le rayon (R₁) de la portion de transition (11) est compris entre 0,05 mm et 4 mm.

7. Palier à roulement selon l'une quelconque des revendications 1 à 6, **caractérisé en ce que** la deuxième surface conique (10) se prolonge avec une arête vive jusqu'au diamètre extérieur (D_{S}) ou au diamètre intérieur de la bague de palier (2a, 2b, 3).

8. Palier à roulement selon l'une quelconque des revendications 1 à 7, **caractérisé en ce qu'**une portion de transition arrondie sous forme concave (12) se raccorde d'abord à l'autre extrémité de la première surface conique (9) puis à son tour une portion de transition arrondie sous forme convexe (13).

9. Palier à roulement selon la revendication 8, **caractérisé en ce que** les rayons (R₂, R₃) des portions de transition (12, 13) sont compris entre 0,5 mm et 2 mm.

10. Palier à roulement selon la revendication 8 ou 9, **caractérisé en ce que** la troisième surface conique (14) se raccorde à la portion de transition arrondie sous forme convexe (13).

11. Palier à roulement selon la revendication 10, **caractérisé en ce qu'**une troisième surface conique (14) se prolonge avec une arête vive dans la face frontale latérale (5).

12. Palier à roulement selon l'une quelconque des revendications 1 à 11, **caractérisé en ce que** la région (18) de la bague de palier (2a, 2b, 3) qui se situe entre la rainure (6) et la piste de roulement (19) des corps de roulement (4), est réalisée sous forme conique.

13. Palier à roulement selon la revendication 12, **caractérisé en ce que** l'angle (α₄) de la région (18) réalisée sous forme conique est compris entre 0,05° et 15°.

14. Palier à roulement selon l'une quelconque des revendications 1 à 13, **caractérisé en ce qu'**il est réalisé sous forme de palier à trois ou quatre points ou sous forme de roulement rainuré à billes.
